(19) Europäisches Patentamt
European Patent Office
Office européen des brevets

(11) **EP 2 055 678 A1**

## EUROPEAN PATENT APPLICATION

published in accordance with Art. 153(4) EPC

(43) Date of publication:
**06.05.2009 Bulletin 2009/19**

(21) Application number: **07791529.6**

(22) Date of filing: **24.07.2007**

(51) Int Cl.:
**C01G 25/02** (2006.01)   **C23C 4/10** (2006.01)

(86) International application number:
**PCT/JP2007/064835**

(87) International publication number:
**WO 2008/013296 (31.01.2008 Gazette 2008/05)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.07.2006 JP 2006201560**

(71) Applicant: **Sumitomo Chemical Company, Limited Tokyo 104-8260 (JP)**

(72) Inventors:
- **UCHIDA, Yoshio Ibaraki (JP)**
- **SADAOKA, Kazuo Osaka (JP)**

(74) Representative: **Vossius & Partner Siebertstrasse 4 81675 München (DE)**

(54) **ZIRCONIUM OXIDE POWDER, PROCESS FOR PRODUCING THE SAME, AND MATERIAL FOR THERMAL SPRAYING**

(57)   The present invention provides a zirconium oxide powder, a method for producing the same, and a material for thermal spraying. The material for thermal spraying comprises a zirconium oxide powder comprising polyhedral particles each having not less than 6 faces, wherein the zirconium oxide powder has D50 of not less than 5 μm and less than 15 μm and a D90/D10 of less than 3. D10, D50 and D90 correspond to the point where the cumulative mass from the small-particle-diameter side reaches 10%, 50%, and 90% in the cumulative particle size distribution.

Fig. 3

10 μm   ×1000

EP 2 055 678 A1

**Description**

**TECHNICAL FIELD**

The present invention relates to a zirconium oxide powder, a method for producing the same, and a material for thermal spraying.

**BACKGROUND ART**

A zirconium oxide powder is used as a material for thermal spraying. A film formed by thermally spraying a zirconium oxide powder is used, for example, for heat resistant members such as a gas turbine blade and jet engine combustion chamber inner wall, and for oxygen sensors, electrolytes of solid electrolyte type fuel cell.

Usually, it is preferable that a thermally sprayed film is uniform. For example it is preferable that the film is uniform in thickness and has few through-holes to improve heat resistance, hardness, abrasion resistance, strength and corrosion resistance. In formation of such a thermally sprayed film, it is preferable to use a powder excellent in fluidity and a powder having narrow particle size distribution, as a material for thermal spraying.

As a method for producing a zirconium oxide powder suitable for a material for thermal spraying, a method is known in which a zirconium oxide powder is granulated and the resultant granules are classified (JP-A-5-320860). However, the conventional method includes a granulation step, resulting in a complicated operation.

**DISCLOSURE OF THE INVENTION**

The present invention has an object of providing a method for producing a zirconium oxide powder easily. Another object of the present invention is to provide a zirconium oxide powder suitable for a material for thermal spraying, and a material for thermal spraying containing the same.

The present inventors have intensively investigated to solve the above-described problem, leading to completion of the present invention.

That is, the present invention provides a method for producing a zirconium oxide powder, comprising the step of calcining a hydrated zirconia having a BET specific surface area of not less than 100 $m^2/g$ and not more than 250 $m^2/g$ and a loss-on-ignition of not less than 5% and not more than 20% under an atmosphere containing a hydrogen halide gas.

The present invention provides a zirconium oxide powder comprising polyhedral particles each having not less than 6 faces, wherein the zirconium oxide powder is obtained by the above-described method and has D50 of not less than 5 $\mu$m and less than 15 $\mu$m and a D90/D10 of less than 3. D10, D50 and D90 correspond to the point where the cumulative mass from the small-particle-diameter side reaches 10%, 50%, and 90% in the cumulative particle size distribution.

Further, the present invention provides a material for thermal spraying comprising a zirconium oxide powder comprising polyhedral particles each having not less than 6 faces, wherein the zirconium oxide powder has D50 of not less than 5 $\mu$m and less than 15 $\mu$m and a D90/D10 of less than 3.

**BRIEF DESCRIPTION OF DRAWINGS**

Fig. 1 shows an X-ray diffraction pattern of hydrated zirconia in Example 1.
Fig. 2 shows an X-ray diffraction pattern of powder 1 in Example 1.
Fig. 3 is an electron micrograph of powder 2 in Example 2.
Fig. 4 shows an X-ray diffraction pattern of powder 3 in Test 1.
Fig. 5 is an electron micrograph of powder 4 in Test 2.
Fig. 6 shows an X-ray diffraction pattern of powder 4 in Test 2.

**MODE FOR CARRYING OUT THE INVENTION**

METHOD FOR PRODUCING ZIRCONIUM OXIDE POWDER

The method for producing a zirconium oxide powder of the present invention includes a step of calcining hydrated zirconia.

Examples of the hydrated zirconia include a hydrate of $ZrO(OH)_2$, hydrate of $Zr_2O_3(OH)_2$, hydrate of $Zr(OH)4$

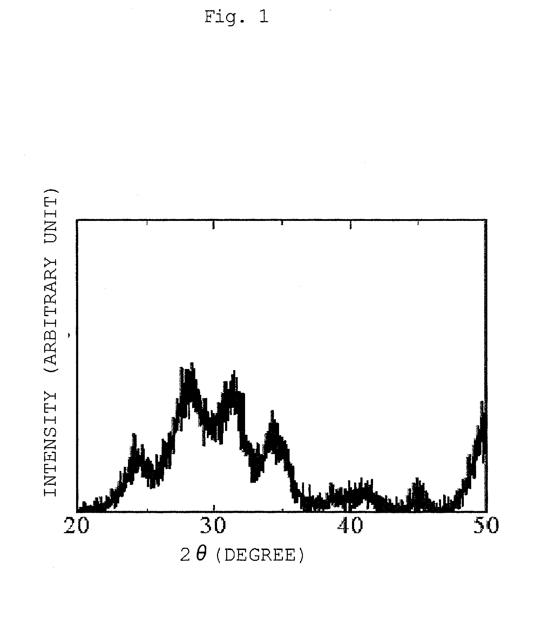

or hydrate of $ZrO_2$. The hydrated zirconia may be used singly or in combination. The hydrated zirconia may be advantageously prepared by a method in which a zirconium salt such as zirconium oxychloride, zirconium nitrate, zirconium chloride and zirconium sulfate is dissolved in water and the resultant aqueous solution is hydrolyzed under heat, or a method in which the aqueous solution is neutralized to obtain a coprecipitate. The zirconium salt is preferably zirconium oxychloride. An X-ray diffraction pattern of hydrated zirconia prepared from zirconium oxychloride is shown in Fig. 1.

The hydrated zirconia has a BET specific surface area of not less than 100 $m^2/g$ and not more than 250 $m^2/g$, from the viewpoint of obtaining a powder with narrower particle size distribution, preferably not less than 150 $m^2/g$ and not more than 200 $m^2/g$.

The hydrated zirconia has a loss-on-ignition (LOI) of not less than 5% and not more than 20%, from the viewpoint of obtaining a powder with narrower particle size distribution, preferably not less than 10% and not more than 15%. LOI may be advantageously calculated according to the following formula (1).

$$LOI\ (\%)\ =\ (W_1 - W_2)/W_1\ \times\ 100\qquad(1)$$

In the formula (1), $W_1$ represents the weight of hydrated zirconia after thermal treatment at 110°C for 2 hours, and $W_2$ represents the weight of a zirconia compound after thermal treatment at 1050°C for 2 hours of the thermally treated hydrated zirconia.

The hydrated zirconia is usually charged into a vessel (for example, crucible, boat), and placed together with the vessel in a furnace and calcined. The material of the vessel is a noble metal such as alumina, quartz, acid resistant brick, graphite and platinum.

Calcination is carried out under an atmosphere containing a hydrogen halide gas. The concentration of the hydrogen halide gas is usually not less than 1% by volume, preferably not less than 5% by volume, more preferably not less than 10% by volume, particularly preferably not less than 90% by volume, with respect to the total volume of the atmosphere. Examples of the hydrogen halide include hydrogen chloride, hydrogen bromide, hydrogen iodide or hydrogen fluoride, and preferably hydrogen chloride. These may be used singly or in combination. Gaseous components (dilution gases) other than the hydrogen halide gas include, for example, inert gases such as nitrogen and argon, and hydrogen, water vapor and air. The pressure of the atmosphere is not particularly limited, and may be advantageously selected in an industrially applicable range.

Calcination may be advantageously carried out under an atmosphere containing a hydrogen halide gas, and for example, may be carried out also by a method in which a molecular halogen and water vapor are introduced into a furnace instead of a hydrogen halide gas, and a hydrogen halide gas is generated in the furnace. Examples of the molecular halogen include molecular chlorine, bromine, iodine or fluorine. These may be used singly or in combination. The concentration of the molecular halogen is usually not less than 1% by volume, preferably not less than 5% by volume, more preferably not less than 10% by volume, with respect to the total volume of the atmosphere, and the concentration of water vapor is usually not less than 0.1% by volume, preferably not less than 1% by volume, more preferably not less than 5% by volume, with respect to the total volume of the atmosphere.

Calcination may be advantageously carried out, for example, by a method in which a gas is introduced into a reaction system containing hydrated zirconia present therein (inside of calcination furnace) from a supply source of gas components. As the supply source of gas components, a gas cylinder may be usually used. As other supply sources of gas components, for example, halides such as ammonium halides, and halogen-containing polymers such as polyvinyl chloride, may also be used. When a halide or halogen-containing polymer is vaporized or decomposed, an atmosphere containing a hydrogen halide or molecular halogen is obtained, thus, it may also be permissible that hydrated zirconia, and a halide or halogen-containing polymer compound are mixed and the mixture is calcined in a furnace.

In calcination, it is preferable to feed a gas into a furnace via pipe and necessary accessories (pressure regulator, mass flow controller and the like) from a gas cylinder filled with a hydrogen halide gas or molecular halogen. The gas feeding mode may be continuous or batch-wise.

The calcination temperature depends on the concentration of a hydrogen halide gas, and the calcination time described later, and is usually not lower than 500°C, preferably not lower than 600°C, and usually not higher than 1500°C, preferably not higher than 1400°C. When the calcination temperature is lower than 500°C, the calcination time is longer. In contrast, when the calcination temperature is over 1500°C, the resultant zirconium oxide powder may contain coagulated particles in larger amount. When the concentration of a hydrogen halide gas is 50% by volume to 100% by volume, the calcination temperature is preferably 1000°C to 1200°C.

The calcination time depends on the concentration of a hydrogen halide gas and the calcination temperature, and usually not shorter than 1 minute, preferably not shorter than 10 minutes. Usually, higher the calcination temperature, shorter the calcination time.

The furnace to be used in calcination is preferably made of a material which is not corroded with a hydrogen halide gas, and further preferably equipped with a mechanism capable of adjusting an atmosphere. Since calcination is carried out using a hydrogen halide gas, it is preferable that the furnace has air tightness. Calcination is preferably carried out in continuous mode, and for example, preferably carried out using a tunnel furnace, rotary kiln or pusher furnace.

The calcined zirconium oxide powder may be deagglomerated or washed, if necessary. Deagglomeration may be advantageously carried out using, for example, mortar or ball mill. Deagglomeration may be advantageously carried out usually for several minutes to several hours.

ZIRCONIUM OXIDE POWDER

Thus obtained zirconium oxide powder has good fluidity and narrow particle size distribution, and typically, comprises polyhedral particles each having not less than 6 faces. The zirconium oxide powder has D50 of not less than 5 $\mu$m and less than 15 $\mu$m and a D90/D10 of less than 3.

D10, D50 and D90 correspond to the point where the cumulative mass from the small-particle-diameter side reaches 10%, 50%, and 90% in the cumulative particle size distribution. The zirconium oxide powder contains particles which are uniform in shape and particle diameter thereof. When a powder for thermal spraying containing a zirconium oxide powder is used, a uniform film thermally sprayed is obtained.

MATERIAL FOR THERMAL SPRAYING

The material for thermal spraying of the present invention includes the above-described zirconium oxide powder. The material for thermal spraying may also be a material having a coating on the surface of the particle contained in the zirconium oxide powder. Examples of the coating include yttrium, scandium, lanthanum, cerium, praseodymium, neodymium, samarium, europium, gadolinium, terbium, magnesium, calcium, hafnium, aluminum, titanium, and compounds of these elements, preferably, yttrium, scandium, lanthanum, cerium, magnesium, calcium, hafnium, aluminum, titanium, and compounds of these elements, more preferably, yttrium, scandium, cerium, magnesium, calcium, and compounds of these elements. These may be used singly or in combination. Examples of the compounds include oxides, nitrates and chlorides.

The amount (mol) of element of the coating is usually not less than 0.01 and not more than 0.2, with respect to the amount (mol) of Zr of zirconium oxide. When the amount is less than 0.01, a sufficiently stabilized zirconium oxide crystal is not obtained. When over 0.2, the element of coating is not solid-solved onto the zirconium oxide crystal in some cases.

The coating has a particle diameter (D50) of usually not more than about 10%, preferably not more than 5% with respect to the particle diameter (D50) of zirconium oxide. When the coating has D50 of over 10%, zirconium oxide is not easily solid-solved. In contrast, the lower limit of D50 of the coating is not particularly limited.

When the zirconium oxide powder has a compound of the element on the surface of the particle contained therein, the element is solid-solved onto the zirconium oxide crystal in thermal spraying, and the zirconium oxide crystal is stabilized as a cubic crystal. That is, when such a zirconium oxide powder including surface-coated particles is used as a material for thermal spraying, a thermally sprayed film containing the stabilized zirconium oxide crystal is obtained.

The zirconium oxide powder including surface-coated particle may be advantageously prepared by a method of mixing a zirconium oxide powder and the above-described compound and the like using, for example, a ball mill, V-shaped mixer, vibration mill, Attritor, Dyno Mill or Dynamic Mill.

Further, the material for thermal spraying may be thermally treated. The thermal treatment temperature varies depending on the coating, and is usually not lower than 500°C d not higher than 1800°C. When the temperature is lower than 500°C, a sufficient thermal treatment effect is not obtained. In contrast, when over 1800°C, particles contained in the zirconium oxide powder grow extraordinarily depending on the kind or amount of element of the coating. By thermal treatment, the coating can be fixed more strongly onto the surface of zirconium oxide, or, the element of the coating can be solid-solved onto the zirconium oxide crystal.

**EXAMPLES**

The present invention will illustrated by examples below, but the scope of the present invention is not limited to these examples.

1. Determination of particle size distribution of zirconium oxide powder

The particle size distribution of a sample was measured using a particle size analyzer (trade name: Mastersizer 2000, manufactured by Malvern Instruments Ltd.). As a dispersion solution, a 0.2% by weight sodium hexametaphosphate aqueous solution was used. The refractive index of the zirconium oxide particle was 2.165. From the results of particle size analysis, the particle diameters at cumulative mass 10% by weight, cumulative mass 50% by weight and cumulative mass 90% by weight from the small-particle side in the cumulative particle size distribution were determined and expressed by D10, D50 and D90, respectively.

2. Structure analysis

The crystal structures of hydrated zirconia and zirconium oxide were determined by powder X-ray diffraction using an X-ray diffractometer (trade name: RINT2500TTR, manufactured by Rigaku Corporation, source: $CuK\alpha$).

3. Determination of BET specific surface area

The BET specific surface areas of hydrated zirconia and zirconium oxide were determined using a surface area analyzer (trade name: Macsorb model-1208, manufactured by Mountech Co. , Ltd.).

Example 1

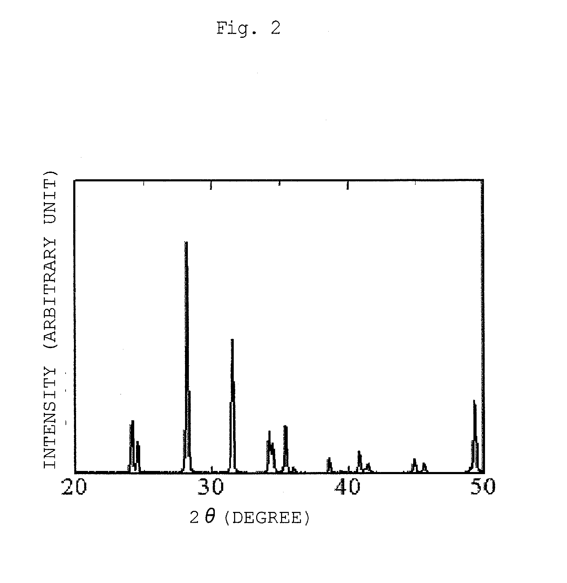

As hydrated zirconia, an uncalcined material of KZ-0Y manufactured by KCM Corporation was used. Hydrated zirconia had a BET specific surface area of 175 $m^2$/g, a LOI of 12.3% and a crystal structure which was the same type as monoclinic zirconium oxide crystal, and a peak profile broader than the peak profile of monoclinic zirconium oxide crystal in an X-ray diffraction pattern (Fig. 1). One kg of the hydrated zirconia was charged into a quartz vessel, and placed in a quartz furnace together with the vessel. A hydrogen chloride gas (manufactured by Tsurumi Soda Co., Ltd., cylinder hydrogen chloride gas, purity 99. 9%) was introduced into the furnace tube under the following conditions for 30 minutes.
flow rate: about 5 cm/minutes
temperature: 25°C (room temperature)
The temperature was elevated at 300°C/hour and kept at 1100°C for 30 minutes while introducing a hydrogen chloride gas. Thereafter, a hydrogen chloride gas was replaced by a nitrogen gas, and the temperature was lowered by natural cooling, obtaining a zirconium oxide powder (powder 1). The weight of the powder 1 was 87% of hydrated zirconia before calcination. The powder 1 had a monoclinic crystal structure (Fig. 2). The powder 1 had a BET specific surface area of 0.15 $m^2$/g, D50 of 10. 3 $\mu$m and a D90/D10 ratio of 2. 6. The powder 1 had polyhedral particles each having not less than 6 faces.

Example 2

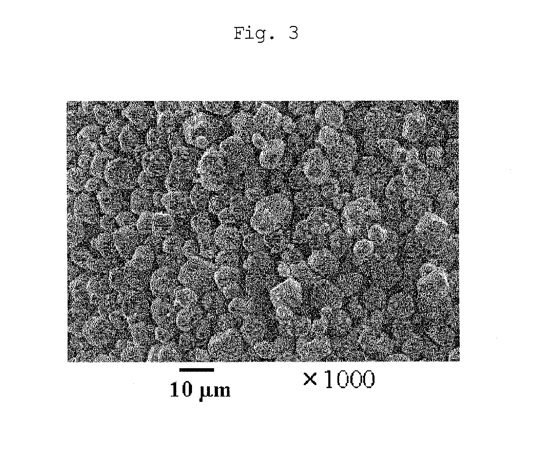

The powder 1 was charged in a dry ball mill [media: nylon coated iron balls (trade name: HighPla ball)], and deagglomerated for 2 hours to obtain a powder 2. The scanning electron micrograph of the powder 2 was shown in Fig. 3. The powder 2 had the same particle shape, D50 and D90/D10 as those of the powder 1.

Test 1

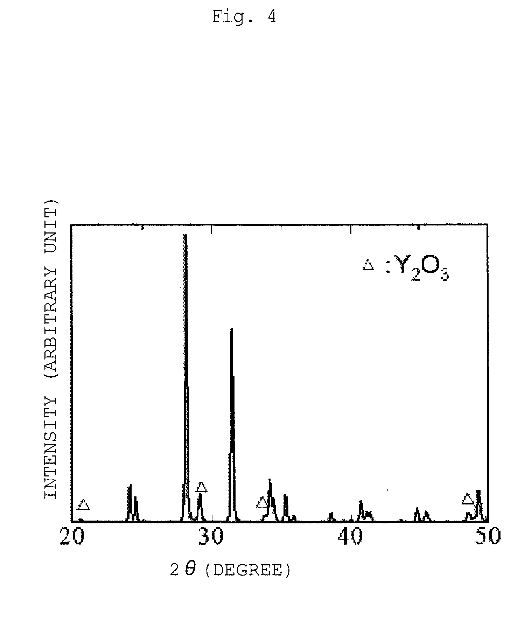

One hundred sixty g of the powder 2 and 14 g of yttrium oxide (manufactured by Nippon Yttrium Co., Ltd., purity 99.9%, fine powder) were charged in a dry ball mill [media: nylon coated iron balls (trade name: HighPla ball)], and mixed for 4 hours to obtain a powder 3. The powder 3 had particles with yttrium oxide on the surface thereof. The X-ray diffraction pattern of the powder 3 was shown in Fig. 4.

Test 2

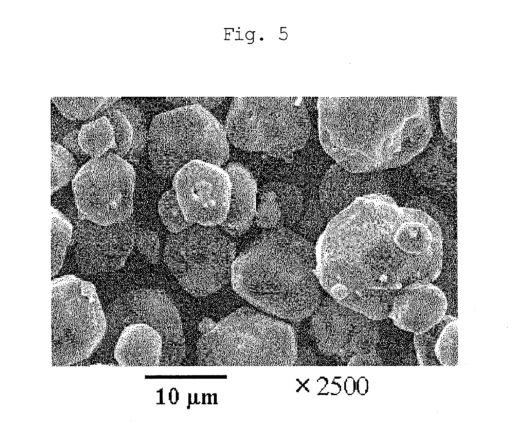

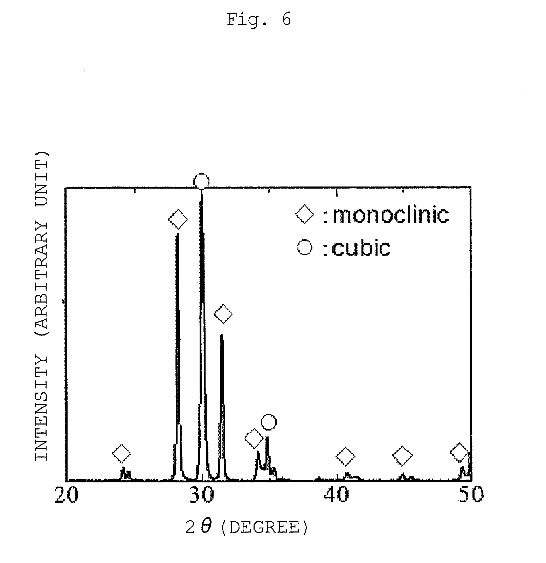

The powder 3 was treated in air at 1600°C for 2 hours, to obtain a powder 4. The powder 4 had particles in which yttrium was solid-solved onto a zirconium oxide crystal. The scanning electron micrograph of the powder 4 was shown in Fig. 5. The powder 4 had a monoclinic crystal structure and cubic crystal structure(Fig. 6).

**INDUSTRIAL APPLICABILITY**

According to the method for producing a zirconium oxide powder of the present invention, a zirconium oxide powder is obtained easily.
The zirconium oxide powder is suitable for a material for thermal spraying because of good fluidity and narrow particle size distribution. The resultant thermally sprayed film has high adhesion efficiency, uniformity and excellent properties such as heat resistance, hardness, abrasion resistance, strength, and corrosion resistance.

**Claims**

1. A method for producing a zirconium oxide powder comprising the step of calcining hydrated zirconia having a BET specific surface area of not less than 100 m$^2$/g and not more than 250 m$^2$/g and a loss-on-ignition of not less than 5% and not more than 20% under an atmosphere containing a hydrogen halide gas.

2. The method according to Claim 1, wherein the hydrated zirconia is at least one selected from the group consisting of hydrates of $ZrO(OH)_2$, $Zr_2O_3(OH)_2$, $Zr(OH)_4$ and $ZrO_2$.

3. The method according to Claim 1, wherein the hydrogen halide is hydrogen chloride.

4. The method according to Claim 1, wherein the concentration of the hydrogen halide is not less than 1% by volume.

5. A zirconium oxide powder comprising polyhedral particles each having not less than 6 faces, wherein the zirconium oxide powder is obtained by the method according to any one of Claims 1 to 4 and has D50 of not less than 5 $\mu$m and less than 15 $\mu$m and a D90/D10 of less than 3. D10, D50 and D90 correspond to the point where the cumulative mass from the small-particle-diameter side reaches 10%, 50%, and 90% in the cumulative particle size distribution.

6. A material for thermal spraying comprising a zirconium oxide powder comprising polyhedral particles each having not less than 6 faces, wherein the zirconium oxide powder has D50 of not less than 5 $\mu$m and less than 15 $\mu$m and a D90/D10 of less than 3. D10, D50 and D90 correspond to the point where the cumulative mass from the small-particle-diameter side reaches 10%, 50%, and 90% in the cumulative particle size distribution.

7. The material according to Claim 6, having a coating on the surface of the particle of the zirconium oxide powder.

8. The material according to Claim 6, wherein the coating is at least one element selected from yttrium, scandium, lanthanum, cerium, praseodymium, neodymium, samarium, europium, gadolinium, terbium, magnesium, calcium, hafnium, aluminum and titanium, or a compound thereof.

9. The material according to Claim 6, wherein at least one element selected from yttrium, scandium, lanthanum, cerium, praseodymium, neodymium, samarium, europium, gadolinium, terbium, magnesium, calcium, hafnium, aluminum and titanium is solid-solved onto the zirconium oxide crystal.

10. A material for thermal spraying, obtained by thermally treating the material according to any one of Claims 6 to 8.

Fig. 1

Fig. 2

Fig. 3

10 μm    × 1000

Fig. 4

Fig. 5

10 μm          × 2500

Fig. 6

**INTERNATIONAL SEARCH REPORT**

International application No.

PCT/JP2007/064835

A.  CLASSIFICATION OF SUBJECT MATTER
*C01G25/02*(2006.01)i, *C23C4/10*(2006.01)i

According to International Patent Classification (IPC) or to both national classification and IPC

B.  FIELDS SEARCHED

Minimum documentation searched (classification system followed by classification symbols)
C01G25/02, C23C4/10

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)
WPI

C.  DOCUMENTS CONSIDERED TO BE RELEVANT

| Category* | Citation of document, with indication, where appropriate, of the relevant passages | Relevant to claim No. |
|---|---|---|
| X<br>A | JP 7-187613 A  (Sumitomo Chemical Co., Ltd.),<br>25 July, 1995 (25.07.95),<br>Claims 1 to 46; Par. Nos. [0001], [0038] to [0040], [0044] to [0046], [0086] to [0088]; table 3; Figs. 6 to 8<br>& WO 1995/004700 A1    & US 5688480 A<br>& EP 666238 A1 | 5-10<br>1-4 |
| A | JP 2003-246623 A  (Sumitomo Chemical Co., Ltd.),<br>02 September, 2003 (02.09.03),<br>& US 2002/0182141 A1    & EP 1264800 A2 | 1-10 |
| A | JP 5-320860 A  (Tosoh Corp.),<br>07 December, 1993 (07.12.93),<br>(Family: none) | 1-10 |

☒  Further documents are listed in the continuation of Box C.       ☐  See patent family annex.

| | |
|---|---|
| *   Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>03 October, 2007 (03.10.07) | Date of mailing of the international search report<br>16 October, 2007 (16.10.07) |
|---|---|
| Name and mailing address of the ISA/<br>Japanese Patent Office | Authorized officer |
| Facsimile No. | Telephone No. |

Form PCT/ISA/210 (second sheet) (April 2005)

| | INTERNATIONAL SEARCH REPORT | International application No. |
|---|---|---|
| | | PCT/JP2007/064835 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-35403 A  (Nippon Shokubai Co., Ltd.),<br>05 February, 2004 (05.02.04),<br>(Family: none) | 1-10 |
| A | JP 4-357115 A  (Tosoh Corp.),<br>10 December, 1992 (10.12.92),<br>& EP 517437 A1 | 1-10 |
| A | JP 10-212122 A  (Tosoh Corp.),<br>11 August, 1998 (11.08.98),<br>& EP 841304 A1 | 1-10 |
| A | JP 4-92818 A  (Showa Shell Sekiyu Kabushiki<br>Kaisha),<br>25 March, 1992 (25.03.92),<br>(Family: none) | 1-10 |

Form PCT/ISA/210 (continuation of second sheet) (April 2005)

**EP 2 055 678 A1**

## REFERENCES CITED IN THE DESCRIPTION

### Patent documents cited in the description

- JP 5320860 A